# FASCICULE DE BREVET EUROPEEN

(11) **EP 2 207 017 B1**
(45) Date de publication et mention de la délivrance du brevet: **04.01.2017**
(21) Numéro de dépôt: 09306077.0
(22) Date de dépôt: 10.11.2009
(51) Int. Cl.: G01F 11/06, B67D 7/64

(54) **Mesureur volumétrique à deux pistons pour installation de distribution de carburant**
Volumetrisches Messgerät mit zwei Kolben für eine Kraftstoff-Abgabevorrichtung
Volumetric measuring device with two pistons for a fuel dispensing facility

(30) Priorité: 19.12.2008 FR 0858831
(43) Date de publication de la demande: 14.07.2010
(73) Titulaire: Tokheim Holding B.V., 5531 AD Bladel (NL)
(72) Inventeur: Herbreteau, Cédric, 14123, IFS (FR); Whyte, Andrew, ARBROATH, ANGUS, DD11 2EZ (GB)
(74) Mandataire: Livet, Marie-José

(56) Documents cités:
- GB-A- 187 979
- GB-A- 332 578
- GB-A- 333 664
- US-A- 2 755 966

## Description

La présente invention a pour objet un mesureur volumétrique pour une installation de distribution de carburant liquide de type quelconque.

La métrologie légale impose que les mesureurs volumétriques équipant les installations de distribution de carburant des stations-services calculent le volume livré dans le réservoir des véhicules automobiles avec une précision de l'ordre du millième.

Pour satisfaire à cette exigence, ces mesureurs doivent donc être extrêmement précis.

A cet effet, il existe actuellement sur le marché différents types de mesureurs volumétriques, en particulier les mesureurs à deux pistons.

De tels mesureurs comportent classiquement un orifice d'entrée relié à un réservoir de stockage et un orifice de sortie relié à un pistolet distributeur ainsi que deux pistons d'axe essentiellement horizontal respectivement mobiles en va-et-vient, sous l'action de la pression exercée par le carburant transféré entre l'orifice d'entrée et l'orifice de sortie, dans des chambres de mesure cylindriques parallèles de volume prédéfini.

Chacune de ces chambres de mesure est subdivisée par le piston associé en deux compartiments fermés hermétiquement, à savoir un premier compartiment ou compartiment avant et un second compartiment ou compartiment arrière.

Il est à noter que, dans la suite de cette description, les termes « avant » et « arrière » seront utilisés par convention, dans le seul but de faciliter l'exposé.

Des organes d'accouplement permettent d'associer les déplacements en va-et-vient des deux pistons dans leur chambre de mesure respective.

Les mesureurs volumétriques à deux pistons classiques sont également équipés d'un arbre de mesure essentiellement vertical qui, d'une part, coopère avec des organes de transmission susceptibles de transformer le déplacement en va-et-vient des deux pistons en un mouvement de rotation de cet arbre et qui, d'autre part, est relié à des organes de détection permettant de déterminer le volume de carburant traversant le mesureur en fonction de cette rotation.

Un tiroir d'admission fixé solidairement en rotation sur l'arbre de mesure est muni d'au moins deux ouvertures, à savoir une ouverture d'entrée et une ouverture de sortie, qui permettent de mettre successivement les compartiments des chambres de mesure en communication avec l'orifice d'entrée et avec l'orifice de sortie du mesureur.

Une série d'orifices de passage et de conduites de passage associées sont percés dans le mesureur pour permettre au carburant introduit par l'orifice d'entrée de celui-ci et passant dans les ouvertures du tiroir d'admission de pénétrer dans l'un des compartiments d'une chambre de mesure.

Le carburant ainsi introduit exerce une pression sur le piston monté dans cette chambre de façon à le déplacer en direction de l'autre compartiment et à refouler le carburant qui y est contenu vers l'orifice de sortie du mesureur.

Simultanément, les organes de transmission déplacent l'arbre de mesure en rotation, ce qui entraîne également la rotation du tiroir d'admission.

Pour permettre aux organes de détection de déterminer le volume de carburant effectivement livré à un utilisateur avec la précision imposée par la métrologie légale, il est nécessaire que tous les éléments constitutifs du mesureur soient équipés de joints d'étanchéité de nature à exclure autant que possible tout risque de fuites externes et que les pistons soient eux aussi équipés de joints d'étanchéité adaptés pour garantir une parfaite isolation des deux compartiments des chambres de mesure l'un par rapport à l'autre au cours de leur déplacement en va et vient.

En effet, toute fuite à ce niveau peut fausser notablement les mesures du volume de carburant transféré dans le mesureur.

Il est également essentiel pour pouvoir convertir avec la grande précision requise, le mouvement de rotation de l'arbre de mesure détecté par les organes de détection en un volume de carburant transféré, de connaître de manière très précise le volume des chambres de mesure.

Or, dans la pratique ce volume n'est pas connu avec une précision suffisante en raison des tolérances d'usinage des différents éléments constitutifs du mesureur et doit être testé et ajusté pour chaque mesureur fabriqué en usine.

A cet effet, un premier compartiment ou compartiment avant des chambres de mesure des mesureurs volumétriques à deux pistons est classiquement équipé à son extrémité, d'une vis d'ajustement réglable faisant office de butée de fin de course avant pour le piston associé.

Chaque mesureur est ainsi testé sur un banc d'essai en usine de fabrication et calibré manuellement avant sa mise en service sur le terrain.

Dans ce but, on détermine sur le banc d'essai un volume de carburant liquide passant par le mesureur et on compare ce volume à un volume cyclique enregistré dans un calculateur relié au mesureur et dédié à la conversion des signaux électriques transmis par les organes de détection de la rotation de l'arbre de mesure en une mesure du volume de carburant délivré.

Dans de tels mesureurs, l'arrêt du mouvement du piston au niveau de l'extrémité arrière de chambre de mesure, peut être simplement consécutif à sa mise en butée contre le fond du compartiment arrière.

Une telle configuration n'est toutefois pas dénuée d'inconvénients dans la mesure où le rapprochement du piston du fond du compartiment arrière peut créer une surpression de nature à le repousser dans l'autre sens et à l'empêcher d'effectuer la totalité de sa course de va-et-vient, ce qui conduit à fausser les mesures du volume délivré.

De surcroît, la mise en butée arrière du piston contre le fond du compartiment arrière peut créer des nuisances sonores et d'éventuelles vibrations du système.

Pour remédier à ces inconvénients, il a déjà été proposé d'usiner un téton central de forme cylindrique de quelques millimètres de hauteur et de diamètre au fond des compartiments arrière des chambres de mesure.

La présence d'un tel téton qui fait office de butée de fin de course arrière pour le piston associé, permet effectivement de garantir, dans tous les cas, la présence d'un volume minimum au niveau du fond du compartiment arrière des chambres de mesure et d'éviter ainsi la création de surpressions trop importantes.

L'expérience a toutefois prouvé que la présence d'un tel téton central ne permet pas de résoudre de façon totalement satisfaisante les problèmes de précision de mesure susmentionnés en raison d'un risque de désalignement des pistons par rapport à l'axe des chambres de mesure au cours de leur déplacement en va-et-vient dans celles-ci.

Un tel désalignement qui est principalement dû au jeu pouvant exister entre les pistons et les parois internes des chambres de mesure du fait d'imprécisions de l'usinage a pour conséquence que la force d'application des joints d'étanchéité montés sur les pistons contre les parois internes des chambres de mesure n'est pas uniforme sur la totalité de la périphérie de celles-ci mais est plus importante sur un côté que sur la surface diamétralement opposée.

Par suite, au niveau de cette dernière surface, il peut se produire entre les deux compartiments des chambres de mesure des fuites de carburant de nature à entraîner une perte de précision notable des mesures de volume de carburant transféré.

De surcroît, un désalignement des pistons par rapport à l'axe des chambres de mesure peut entraîner une usure anormale des joints d'étanchéité équipant les pistons et créer ainsi des fuites permanentes de carburant de nature à augmenter la perte de précision susmentionnée.

Or, dans les mesureurs volumétriques à deux pistons parallèles actuellement proposés sur le marché, tout réalignement des pistons est impossible.

De plus, dans ces configurations et bien que les différents éléments du mesureur soient dimensionnés et positionnés pour que les pistons effleurent les butées de fin de course avant de se déplacer dans l'autre sens, il se produit toujours en pratique des chocs entraînant des vibrations et surtout une usure prématurée du mesureur, ce en raison d'imprécisions d'usinage et de montage.

Un mesureur volumétrique pour installation de distribution de liquide est décrit dans le document US2755966.

La présente invention a pour objet de remédier à ces inconvénients en proposant un mesureur volumétrique de carburant du type susmentionné dont la configuration permet d'éviter toute surpression trop importante en fin de course des pistons et de réaligner ces derniers par rapport à l'axe des chambres de mesure associées.

Selon l'invention, un tel mesureur volumétrique est caractérisé en ce que la paroi interne d'au moins l'un des compartiments de chacune des chambres de mesure ou compartiment arrière est équipée d'au moins un épaulement définissant une butée de fin de course pour le piston associé, usiné au niveau de son extrémité.

Selon une caractéristique particulièrement avantageuse de l'invention, le compartiment arrière de chacune des chambres de mesure est équipé de deux épaulements identiques diamétralement opposés.

De tels épaulements sont, de préférence, en forme de secteurs annulaires et ont, de préférence, une face frontale plane.

Lors de leur déplacement en va-et-vient dans les chambres de mesure associées, les pistons ne viennent en général en butée arrière, dans un premier temps, que contre un point de la face frontale de l'un des épaulements, en raison de leur désalignement dans ces chambres de mesure.

Il est à noter que, selon l'invention, les épaulements, les organes d'accouplement et les pistons sont dimensionnés pour que ces derniers puissent reposer sur la totalité des faces frontales des épaulements en position de butée arrière.

Par suite, les pistons poursuivent leur course dans le même sens jusqu'à une position finale dans laquelle ils sont parfaitement en contact sur la totalité des faces frontales des deux épaulements ce qui provoque un réalignement automatique des pistons de sorte que leur axe se confonde avec celui de la chambre de mesure associée.

A début de la phase suivante de mouvement vers l'avant de leur déplacement en va-et-vient, les pistons sont ainsi redressés dans une position initialement parfaite, ce qui permet de limiter leur désalignement dans la suite de ce mouvement et donc les fuites internes les deux compartiments des chambres de mesure.

L'usure des joints d'étanchéité équipant les pistons est par suite plus uniforme et réduite, ce qui permet d'augmenter la précision du mesureur pendant la totalité de sa durée de vie.

De plus, la mise en contact des pistons sur la totalité de la face frontale des épaulements permet de diminuer l'usure des pistons et des chambres de mesure, ce bien entendu à la condition que ces faces frontales aient des dimensions suffisantes pour permettre le réalignement des pistons.

Selon une autre caractéristique de l'invention, les deux épaulements, identiques et diamétralement opposés équipant le compartiment arrière des chambres de mesure, ont une forme dentelée, leur face frontale demeurant plane.

Une telle configuration permet de diminuer la quantité de matériau nécessaire à la réalisation des épaulements, et par suite de réduire le coût ainsi que le poids des mesureurs volumétriques.

Les épaulements équipant les compartiments arrière des chambres de mesure du mesureur volumétrique peuvent bien entendu avoir une configuration différente des configurations susmentionnées sans pour cela sortir du cadre de l'invention ; en particulier, ces compartiments peuvent être équipés d'un seul épaulement de forme annulaire, s'étendant essentiellement sur la totalité de leur périphérie interne.

Par ailleurs et comme il a déjà été indiqué, en raison des tolérances d'usinage des différents éléments constitutifs du mesureur, le volume cyclique de chacune des chambres de mesure n'est pas connu précisément, et doit être testé et réglé.

Selon une première variante de l'invention, un tel réglage peut, de façon connue en elle-même, être effectué manuellement.

A cet effet, le compartiment avant de chacune des chambres de mesure est équipé à son extrémité d'un couvercle muni d'une vis d'ajustement réglable, faisant office de butée de fin de course avant pour le piston associé.

Selon cette première variante de l'invention, le réglage du volume cyclique de chaque chambre de mesure est ainsi effectué manuellement d'une manière similaire aux mesureurs volumétriques du même type actuellement sur le marché en ajustant la profondeur de chaque vis d'ajustement de façon à limiter la course des pistons.

Selon une seconde variante de l'invention, le compartiment avant de chacune des chambres de mesure est fermé hermétiquement à son extrémité par un couvercle sur lequel est également usiné au moins un épaulement.

Un tel épaulement définit une butée de fin de course avant pour le piston associé lorsque le couvercle avant est monté sur le mesureur.

Les épaulements usinés sur le couvercle avant peuvent être ou non identiques aux épaulements usinés sur les compartiments arrière des chambres de mesure sans pour cela sortir du cadre de l'invention.

Cette seconde variante de l'invention présente l'avantage de permettre de réaligner les pistons lors de chaque changement de direction, après chacune des phases de leur déplacement en va-et-vient, c'est-à-dire non seulement à la fin de leur mouvement vers l'arrière mais également à la fin de leur mouvement vers l'avant, alors que selon la première variante de l'invention, les pistons sont désaxés jusqu'à ce qu'ils viennent en butée contre les épaulements équipant les compartiments arrière à l'issue de leur mouvement vers l'arrière et ne sont pas réalignés avant la mise en butée arrière suivante.

Les fuites internes entre les deux compartiments de chambres de mesure, consécutives au désalignement des pistons peuvent ainsi être plus fortement réduites ce qui permet d'obtenir un gain en précision plus important.

De plus, l'usure des joints et des éléments constitutifs du mesureur est elle aussi ainsi réduite.

Cette seconde variante de l'invention présente toutefois un inconvénient lié au fait que le réglage du volume cyclique de chacune des chambres de mesure ne peut pas être effectué manuellement en usine car les épaulements faisant office de butées au niveau des compartiments avant, des chambres de mesure sont usinées d'un seul bloc avec les couvercles avant fermant ces compartiments et ne peuvent être modifiés.

Selon une autre caractéristique de l'invention de nature à remédier à cet inconvénient, le volume cyclique de chaque chambre de mesure est calibré électroniquement.

La calibration de chaque mesureur produit en usine est ainsi réalisée pour un volume de carburant mesuré défini sur un banc d'essai où le volume cyclique réel de chaque chambre de mesure est déterminé et enregistré électroniquement dans un calculateur relié au mesureur et dédié à la conversion des signaux électriques transmis par les organes de détection de la rotation de l'arbre de mesure en une mesure de carburant délivré.

De plus, selon une autre caractéristique de l'invention, il est également possible de calibrer le volume cyclique de chaque chambre de mesure par une courbe de calibration spécifique de correction d'erreur en fonction du temps à partir de données préenregistrées.

De manière plus précise, les données enregistrées pour chaque mesureur testé en usine sur un banc d'essai, pour un volume de carburant mesuré défini en règle générale inférieur à 100 000 litres, sont comparées à des données de référence préalablement enregistrées dans une base de données électronique d'un calculateur relié au banc d'essai.

Ces données de référence sont préalablement recueillies lors de tests de durée de vie de mesureurs de même type sur un banc d'essai et/ou dans une station-service, effectués en règle générale pour plus de 10 millions de litres mesurés, et permettent de mettre en évidence des caractéristiques de comportement types des mesureurs au cours de leur durée de vie.

Le comportement initial (lors des 100 000 premiers litres de carburant mesuré d'un mesureur est en particulier représentatif de l'évolution de la précision de ses mesures au cours de sa durée de vie, qui dépend notamment de l'usure des éléments constitutifs du mesureur et des fuites internes.

Pour un mesureur donné testé en usine sur un banc d'essai, une courbe de calibration spécifique à ce mesureur est alors déterminée par le calculateur relié au banc d'essai et enregistrée électroniquement dans le calculateur relié au mesureur testé.

Cette courbe permet de corriger le volume cyclique réel des chambres de mesure et prend en compte les caractéristiques du comportement initial du mesureur testé corrélées à des caractéristiques des comportements de référence similaires enregistrées dans la base de données pour apporter une correction de la précision de la mesure au cours du temps selon ces données de référence.

Les caractéristiques du mesureur volumétrique à deux pistons parallèles qui fait l'objet de l'invention seront décrites plus en détail en se référant aux dessins non limitatifs annexés dans lesquels :
- la figure 1a est une vue en perspective d'un tel mesureur,
- la figure 1b est une vue arrière de ce mesureur,
- la figure 2 est une vue éclatée de ce mesureur,
- la figure 3a est une vue en coupe transversale d'un mesureur correspondant à la première variante de l'invention,
- la figure 3b est une vue en coupe transversale similaire à la figure 3 mais représentant un mesureur correspondant à la seconde variante de l'invention,
- la figure 4 est une vue éclatée d'un piston monté dans un tel mesureur,
- les figures 5a à 5c sont des vues de dessus du corps de mesureur représentant trois variantes d'épaulement, et
- les figures 6a et 6b sont des schémas de principe illustratifs des différentes étapes du fonctionnement du mesureur conforme à l'invention.

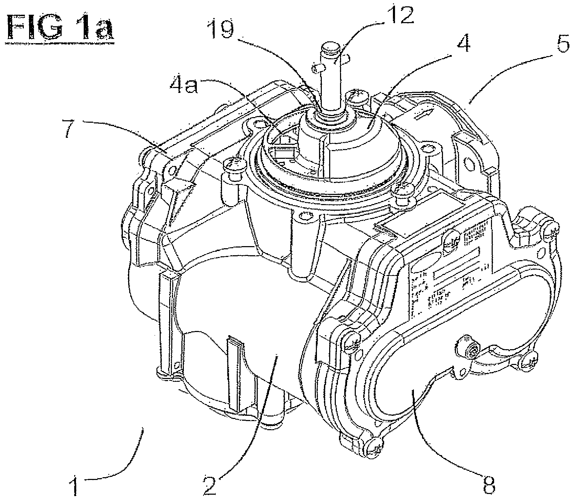

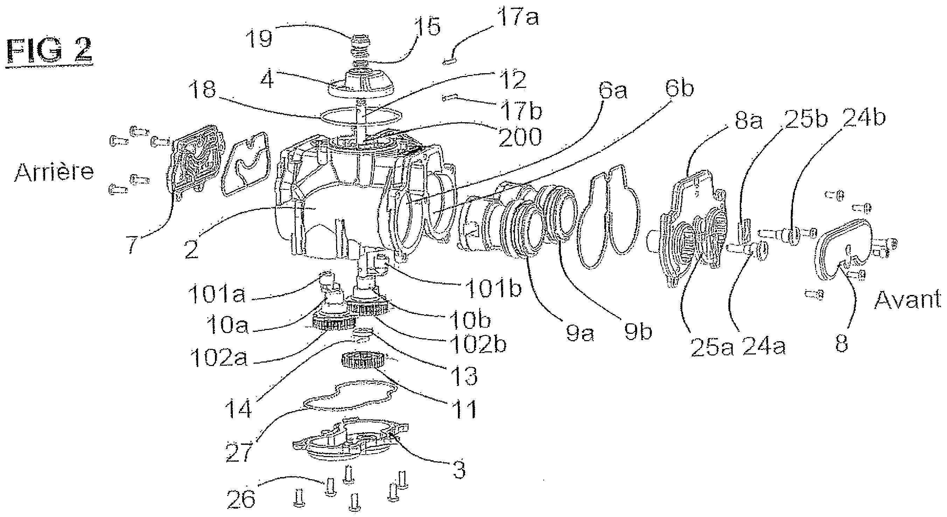

Selon les figures 1a et 2, le mesureur volumétrique 1 comporte un corps de mesureur 2 fermé par un couvercle inférieur 3 ainsi que par un couvercle supérieur non représenté qui est équipé d'un orifice d'entrée relié à un réservoir de stockage de carburant et à des éléments hydrauliques de façon à permettre l'introduction de carburant liquide dans le corps de mesureur 2.

Le corps de mesureur 2 comporte également un orifice de sortie 5 représenté schématiquement sur la figure 1a qui est relié à un pistolet distributeur de façon à permettre l'évacuation du carburant du corps de mesureur 2 et le remplissage du réservoir de véhicules automobiles.

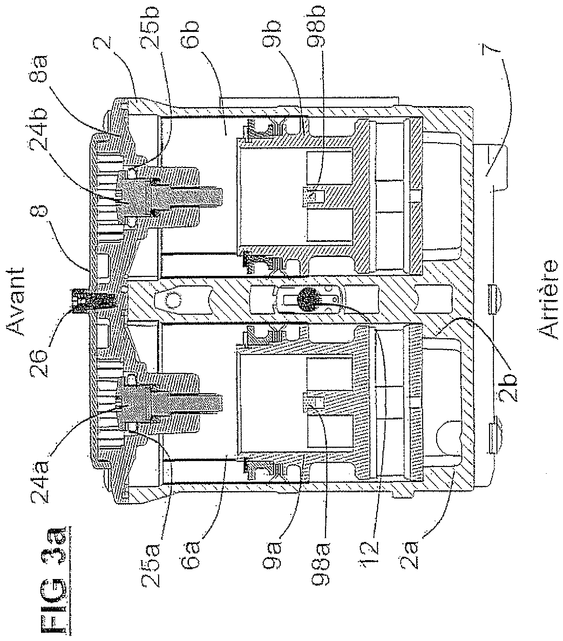

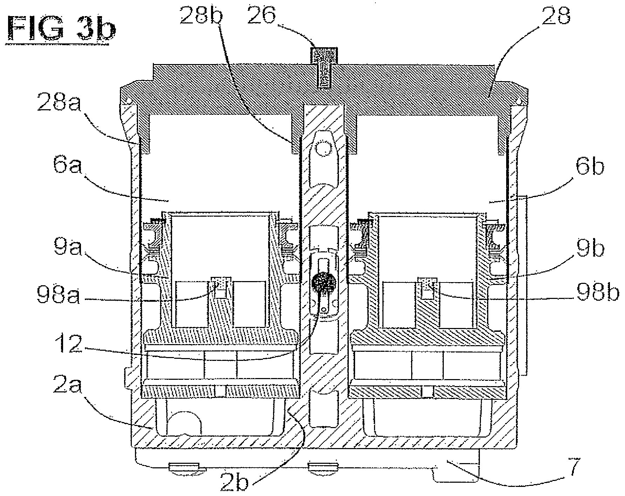

Selon les figures 2, 3a et 3b, le corps de mesureur 2 délimite à sa partie interne deux chambres de mesure cylindriques parallèles 6a, 6b de volume prédéfini d'axe essentiellement horizontal.

Ces deux chambres de mesure sont fermées hermétiquement à chacune de leurs extrémités par un couvercle avant 8 et un couvercle arrière 7.

Selon la figure 2, les couvercles supérieur, inférieur 3, arrière 7 et avant 8 sont fixés au corps de mesureur 2 par des vis 26.

Des joints d'étanchéité 27 permettent de garantir l'étanchéité au niveau de ces différents éléments.

Deux pistons 9a, 9b sont respectivement mobiles en va-et-vient dans les chambres de mesure 6a, 6b sous l'action de la pression exercée par le carburant transféré entre l'orifice d'entrée et l'orifice de sortie 5.

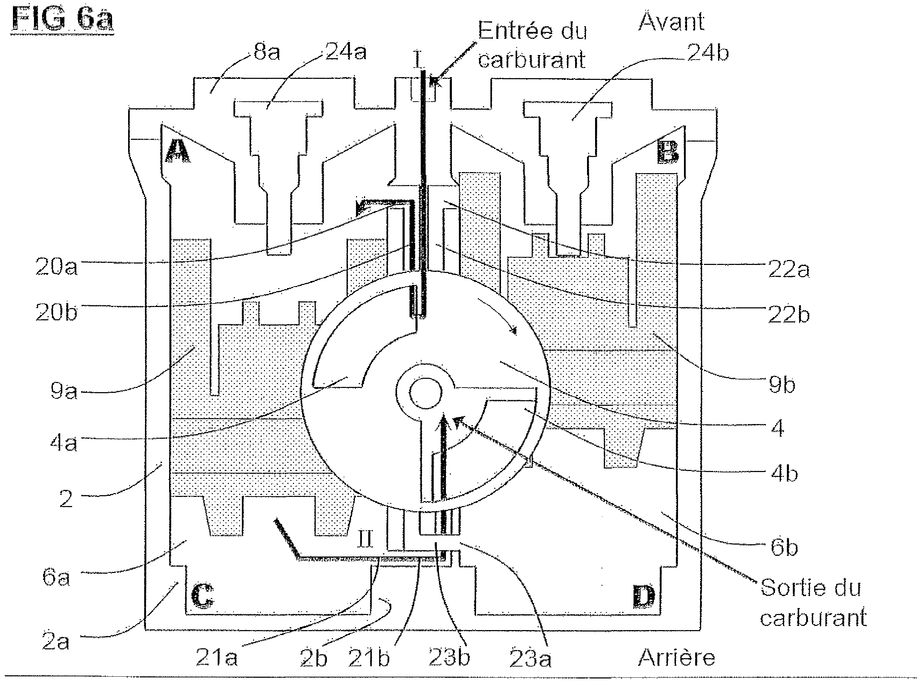

Selon les figures 6a à 6d, chacun de ces pistons 9a, 9b subdivise la chambre de mesure 6a, 6b associée en deux compartiments étanches l'un par rapport à l'autre, à savoir un compartiment avant A, B et un compartiment arrière C, D.

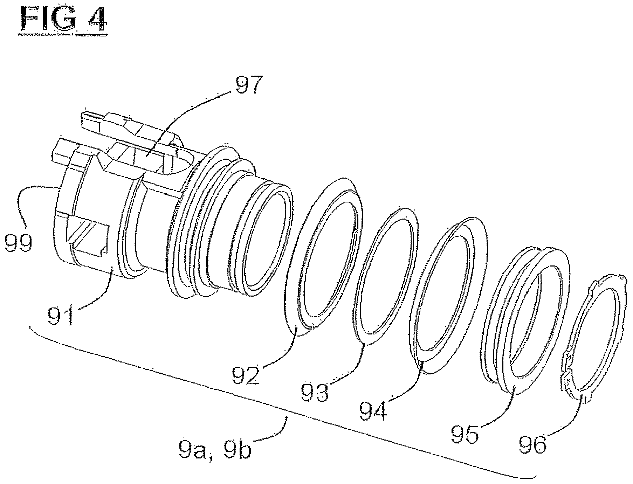

Selon la figure 4, pour garantir cette étanchéité, chacun des pistons 9a, 9b comporte essentiellement un corps de piston 91 sur lequel sont montés un premier joint d'étanchéité 92 maintenu par un anneau de serrage 93 ainsi qu'un second joint d'étanchéité 94.

L'ensemble de ces éléments est maintenu sur le corps de piston 91 par une bague de maintien 95 et serré par un anneau de serrage 96.

Les deux joints d'étanchéité 92 et 94 sont équipés de collerettes externes dirigées en sens inverse qui s'appliquent contre les parois internes des chambres de mesure 6a, 6b pendant le déplacement en va-et-vient des pistons 9a, 9b.

Selon les figures 2 et 4, chaque piston 9a, 9b comporte une ouverture 97 de forme allongée dans laquelle passe une tige de transmission 101a, 101b.

Un vilebrequin d'axe essentiellement vertical 10a, 10b est articulé de façon excentrique sur chacune des tiges de transmission 101a, 101b de sorte que le mouvement en translation en va-et-vient des pistons 9a, 9b entraîne la rotation des vilebrequins 10a, 10b.

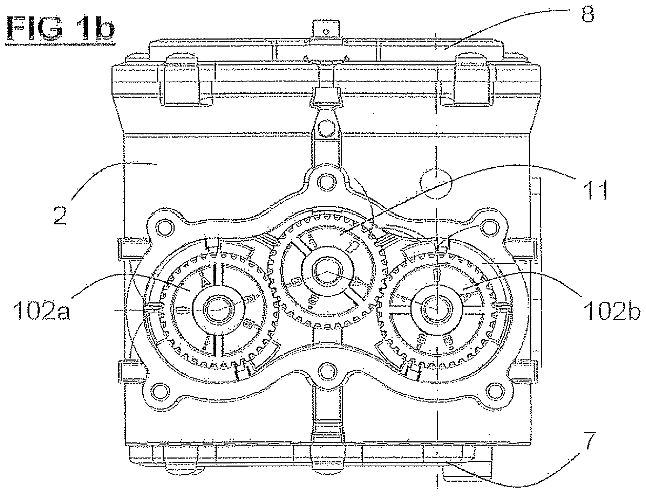

Selon les figures 1b et 2, un pignon 102a, 102b ayant un nombre de dents prédéfini est fixé solidairement en rotation sur chacun des vilebrequins 10a, 10b.

Un pignon central 11 est en outre intercalé entre les deux pignons 102a, 102b pour permettre d'accoupler les mouvements en va-et-vient des deux pistons 9a, 9b dans leurs chambres de mesure respectives 6a et 6b.

Les vilebrequins 10a, 10b, les pignons 102a, 102b ainsi que le pignon central 11 sont montés à l'extérieur du corps de mesureur 2 et protégés par le couvercle inférieur 3.

Selon les figures 1a, 1b et 2, le pignon central 11 est par ailleurs fixé solidairement en rotation à l'extrémité inférieure d'un arbre de mesure vertical 12 et maintenu sur cet arbre 12 par une entretoise 13 et une goupille 14.

L'arbre de mesure 12 fait saillie à la partie supérieure du corps de mesureur 2 et est relié à ce niveau à des organes de détection non représentés sur les figures qui permettent de déterminer le volume de carburant traversant le mesureur 1 en fonction de la rotation de cet arbre 12 et donc du déplacement en va-et-vient des pistons 9a, 9b dans les chambres de mesure respectives 6a, 6b.

Une ouverture 200 permet le passage de l'arbre de mesure 12 au travers du corps de mesureur 2 à la partie supérieure de celui-ci.

Selon une première variante de l'invention représentée sur les figures 2, 3a et 6a à 6d, le couvercle avant 8 est monté sur un premier couvercle d'ajustement 8a qui ferme hermétiquement les compartiments avant A, B des chambres de mesure 6a, 6b et est équipé de deux vis d'ajustement respectives 24a et 24b montées sur des ressorts 25a et 25b.

Les vis d'ajustement 24a, 24b définissent une butée de fin de course avant pour le piston 9a, 6b associé lors de son mouvement vers l'avant.

A cet effet et selon la figure 3a, les extrémités des vis d'ajustement 24a, 24b viennent en contact avec un support de contact 98a, 98b monté à la partie interne de chaque piston 9a, 9b afin d'en limiter la course.

Le réglage manuel des vis d'ajustement 24a, 24b permet de calibrer le volume cyclique des chambres de mesure 6a, 6b avant la mise en service du mesureur.

Par ailleurs et selon les figures 1a, 2 et 6a à 6d, un tiroir d'admission 4 est fixé solidairement en rotation sur l'arbre de mesure 12 par l'intermédiaire d'une rondelle 15 d'une bague tournante 16 et de goupilles 17a, 17b.

Un joint torique 18 et une bague d'étanchéité 19 assurent l'étanchéité du montage.

La rotation du pignon central 11 des vilebrequins 10a, 10b et donc le déplacement en va-et-vient des pistons 9a, 9b entraîne par suite la rotation du tiroir d'admission 4.

Selon les figures 6a à 6d, ce tiroir 4 est équipé de deux ouvertures allongées diamétralement opposées, à savoir une ouverture d'entrée 4a qui communique avec l'orifice d'entrée du mesureur 1 et une ouverture de sortie 4b qui communiquent avec l'orifice de sortie 5 de celui-ci.

Les ouvertures 4a, 4b qui s'étendent chacune sur un quart de cercle (0 à 90° et 180 à 270°) permettent de mettre successivement les compartiments A, C et B, D des chambres de mesure 6a, 6b en communication avec l'orifice d'entrée et avec l'orifice de sortie 5 du mesureur 1.

Une série d'orifices de passage 20a, 21a, 22a et 23a et des conduites de passage associés 20b, 21b, 22b et 23b qui sont représentés de façon schématique sur les figures 6a à 6b sont percés à la partie interne du corps de mesureur 2 de façon à permettre cette mise en communication et donc à permettre au carburant introduit par l'orifice d'entrée du mesureur 1 et passant dans l'ouverture d'entrée 4a du tiroir d'admission 4 de pénétrer dans l'un des compartiments A, C, B, D des chambres de mesure 6a, 6b, et d'en être évacué par l'orifice de sortie 5 en passant par l'ouverture de sortie 4b du tiroir d'admission.

Les différentes phases du cycle de déplacement en va-et-vient des pistons 9a, 6b dans les chambres de mesure 6a, 6b seront décrites ci-dessous en référence aux figures 6a à 6d.

Dans une première phase représentée sur la figure 6a, le piston 9b est en position de butée avant contre la vis d'ajustement associée 24b alors que le piston 9a est dans une position intermédiaire de son déplacement vers l'arrière.

Les orifices de passage 22a et 23a et les conduites de passage 22b et 23b associés aux compartiments B et D de la chambre de mesure 6b sont fermés par le tiroir d'admission 4 alors que les conduites de passage 20a, 21a et les conduites de passage 20b, 21b associés aux compartiments A et C de la chambre de mesure 6a sont ouverts par le tiroir d'admission 4.

L'orifice de passage 20a et la conduite de passage 20b associés au compartiment avant A de cette chambre sont plus précisément situés au droit de l'ouverture d'entrée 4a de ce tiroir 4 alors que l'orifice de passage 21a et la conduite de passage 21b associés au compartiment arrière C sont quant à eux situés au droit de l'ouverture de sortie 4b.

Dans cette position, et comme schématisé par les flèches I et II, le carburant liquide qui entre dans le mesureur 1 par l'orifice d'entrée passe par l'ouverture d'entrée 4a du tiroir d'admission 4 puis par la conduite de passage 20b et l'orifice de passage 20a du corps de mesureur 2 pour entrer dans le compartiment avant A de la chambre de mesure 6a selon la flèche I.

Sous l'action de la pression de ce carburant, le piston 9a est repoussé vers l'arrière en direction du compartiment C et refoule le carburant renfermé dans ce compartiment vers l'orifice de passage 21a, la conduite de passage 21b et l'ouverture de sortie 4b du tiroir d'admission 4 puis vers l'orifice de sortie 5 du mesureur selon la flèche II.

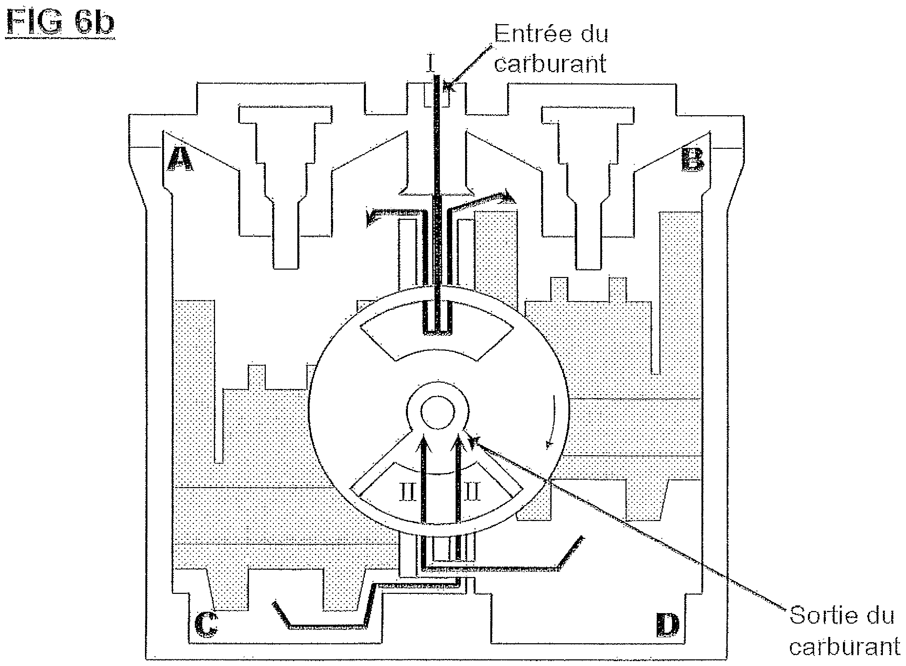

Le déplacement du piston 9a entraîne simultanément la rotation du vilebrequin 10a et du pignon 102a associés et par suite la rotation du pignon central 11 de l'arbre de mesure 12 et du tiroir d'admission 4 dans le sens des aiguilles d'une montre jusqu'à ce que le mesureur se trouve dans une seconde position représentée sur la figure 6b.

Dans cette seconde phase, les pistons 9a, 9b sont tous les deux dans une position intermédiaire de leur déplacement vers l'arrière.

Les orifices de passage 20a, 21a, 22a et 23a ainsi que les conduites de passage 20b, 21b, 22b et 23b associés aux quatre compartiments A, C, B et D des chambres de mesure 6a et 6b sont ouverts par le tiroir d'admission 4 ; les orifices de passage 20a, 22a et les conduites de passage 20b et 22b respectivement associés aux compartiments avant A et B sont plus précisément situés au droit de l'ouverture d'entrée 4a de ce tiroir 4 alors que les orifices de passage 21a et 23a et les conduites de passage 21b, 23b associés aux compartiments arrière C et D sont situés au droit de l'ouverture de sortie 4c.

Dans cette position, le carburant entre selon les flèches I dans les compartiments avant A et B des chambres de mesure 6a et 6b et repousse les pistons 9a et 9b vers l'arrière en direction des compartiments C et D de façon à refouler le carburant renfermé dans ces compartiments vers l'orifice de sortie 5 du mesureur selon les flèches II.

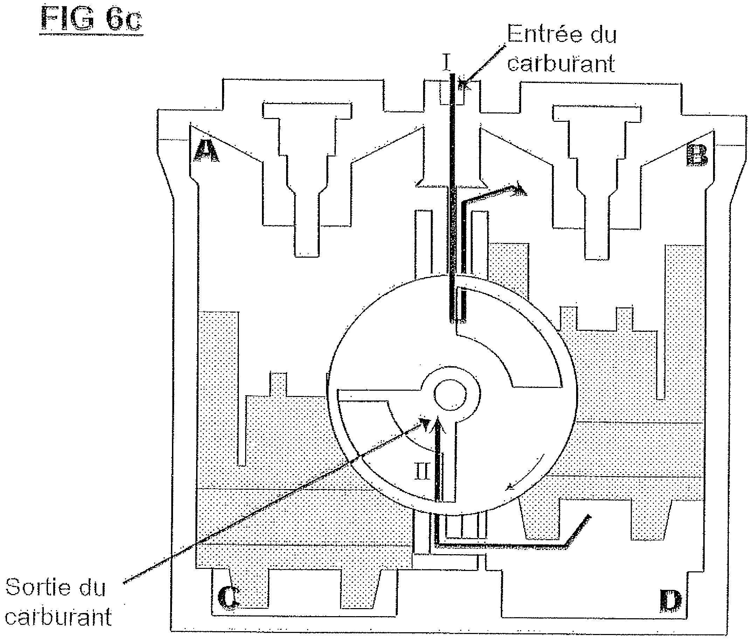

Le déplacement conjugué des deux pistons 9a et 9b entraîne la poursuite de la rotation de l'arbre de mesure 12 et du tiroir d'admission 4 dans le sens des aiguilles d'une montre jusqu'à ce que le mesureur se trouve dans une troisième position représentée sur la figure 6c.

Dans cette troisième phase, le piston 9a est dans une position de butée arrière qui sera décrite plus en détail dans la suite de cet exposé, et le piston 9b est dans une position intermédiaire de son déplacement vers l'arrière.

Les orifices de passage 20a, 21a et les conduites de passage 20b, 21b associés aux compartiments A et C de la chambre de mesure 6a sont fermés par le tiroir d'admission 4 alors que les orifices de passage 22a, 23a et les conduites de passage 22b, 23b associés aux compartiments B et D de la chambre de mesure 6b sont fermés par ce tiroir.

L'orifice de passage 22a et la conduite de passage 22b associés au compartiment avant B de cette chambre sont plus précisément situés au droit de l'ouverture d'entrée 4a de ce tiroir 4 alors que l'orifice de passage 23a et la conduite de passage 23b associés au compartiment arrière D sont situés au droit de l'ouverture de sortie 4b.

Le carburant pénètre ainsi dans le compartiment B selon la flèche I et repousse le piston 9b vers l'arrière en direction du compartiment D de façon à refouler le carburant renfermé dans ce compartiment vers l'orifice de sortie 5 selon la flèche II.

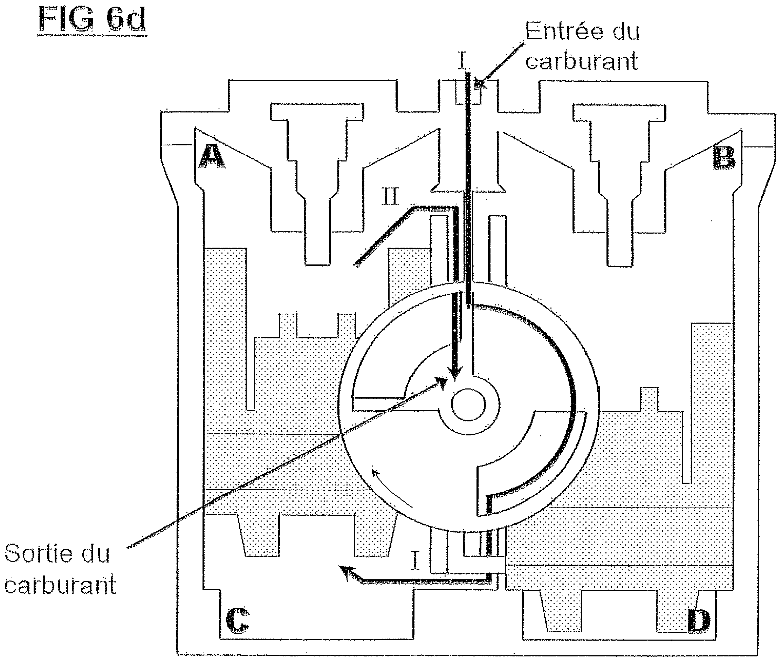

Simultanément, la rotation du tiroir d'admission 4 dans le sens des aiguilles d'une montre se poursuit jusqu'à ce que le mesureur se trouve dans une quatrième position représentée sur la figure 6d.

Dans cette quatrième phase, le piston 9b est dans une position de butée arrière qui sera décrite plus en détail dans la suite de cet exposé tandis que le piston 9a est dans une position intermédiaire de son déplacement vers l'avant.

Les orifices de passage 22a, 23a et les conduites de passage 22b, 23b associés aux compartiments B et D de la chambre de mesure 6b sont fermés par le tiroir d'admission 4 alors que les orifices de passage 20a, 21a et les conduites de passage 20b, 21c associés aux compartiments A et C de la chambre de mesure 6a sont ouverts par le tiroir d'admission 4.

L'orifice de passage 20a et la conduite de passage 20b associés au compartiment avant A de cette chambre sont plus précisément situés au droit de l'ouverture de sortie 20b de ce tiroir 4 alors que l'orifice de passage 21a et la conduite de passage 21b associés au compartiment arrière C sont situés au droit de l'ouverture d'entrée 4a.

Le carburant pénètre ainsi dans le compartiment C selon la flèche I et repousse le piston 9a vers l'avant en direction du compartiment A de façon à refouler le carburant contenu dans ce compartiment vers l'orifice de sortie 5 du mesureur 1 selon la flèche II.

De façon non représentée sur les figures, la rotation du tiroir d'admission 4 dans le sens des aiguilles d'une montre se poursuit jusqu'à une cinquième position dans laquelle tous les orifices de passage 20a, 21a, 22a, 23a et toutes les conduites de passage 20b, 21b, 22b, 23b associés aux quatre compartiments A, C, B et D des chambres de mesure 6a et 6b sont ouverts et le carburant pénètre dans les compartiments arrière C et D et est refoulé vers l'orifice de sortie 5 du mesureur par les compartiments avant A et B, puis jusqu'à une sixième position dans laquelle les orifices de passage 20a, 21a et les conduites de passage 20b, 21b associés aux compartiments A et C de la chambre de mesure 6a sont fermés tandis que les orifices de passage 22a, 23a et les conduites de passage 22b, 23b associés aux compartiments B et D de la chambre de mesure 6b sont ouverts par le tiroir d'admission 4 et le carburant pénètre dans le compartiment arrière D pour être refoulé vers l'orifice de sortie 5 par le compartiment avant B.

Le mouvement de rotation du tiroir d'admission 4 se poursuit ensuite jusqu'à ce que le mesureur 1 se retrouve dans la première position représentée sur la figure 6a.

Selon les figures 3a, 5a et 6a à 6b, la paroi interne des compartiments arrière C et B des chambres de mesure 6a et 6b est équipée de deux épaulements identiques 2a, 2b diamétralement opposés usinés au niveau de son extrémité.

Ces épaulements 2a, 2b définissent des butées de fin de course arrière des pistons 9a, 9b à l'opposé des vis d'ajustement 24a, 24b et permettent parallèlement de les réaligner lors de chaque course sur l'axe des chambres de mesure 6a, 6b associées.

Ils ont la forme de secteurs circulaires qui s'étendent sur environ un quart de cercle et présentent une face frontale plane.

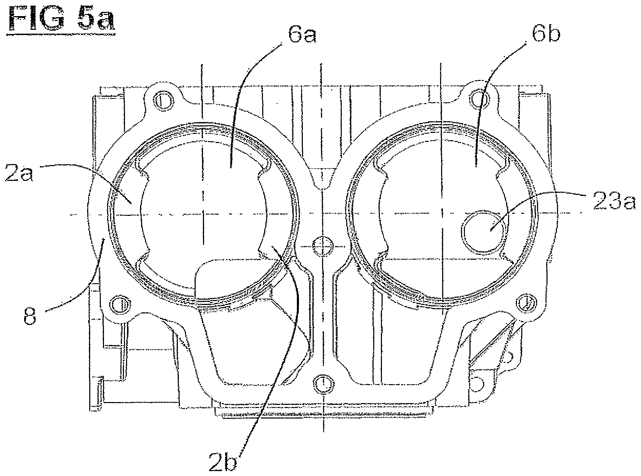

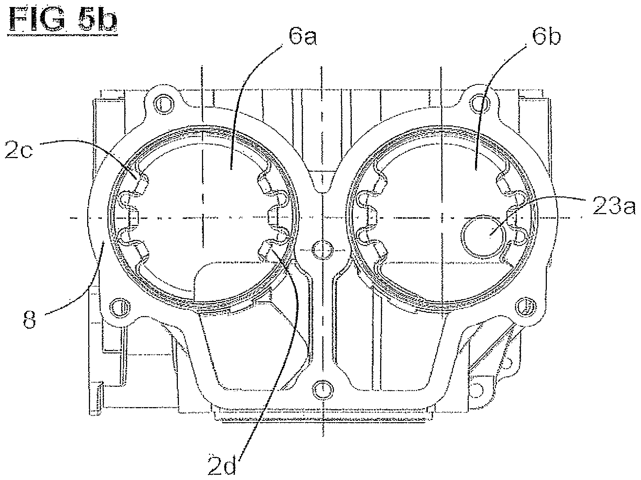

Selon un autre mode de réalisation représenté sur la figure 5b, les compartiments arrière C et D des chambres de mesure 6a, 6b sont équipés d'épaulements 2c, 2d globalement identiques aux épaulements 2a, 2b représentés sur la figure 5a mais qui ont une forme dentelée, leur face frontale demeurant plane.

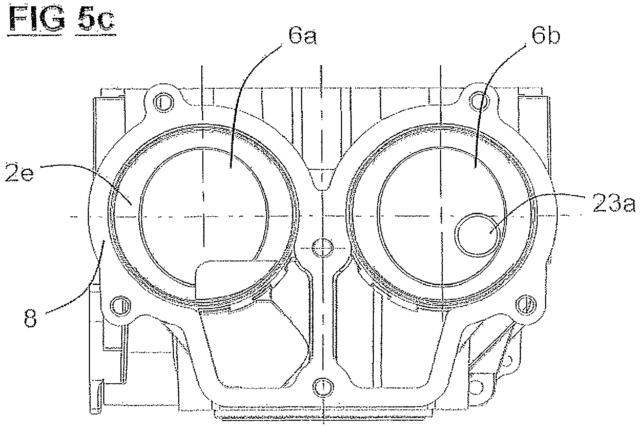

Selon encore un autre mode de réalisation représenté sur la figure 5c, les compartiments arrières C et D des chambres de mesure 6a et 6b sont équipés d'un épaulement unique 2e de forme annulaire s'étendant sur la totalité de leur périphérie interne.

Selon une seconde variante de l'invention représentée sur la figure 3b, les compartiments avant A et B des chambres de mesure 6a, 6b ne sont pas équipés de vis d'ajustage 24a, 24b, mais sont fermés hermétiquement à leur extrémité par un couvercle 28 équipé d'épaulements 28a, 28b.

Ces épaulements 28a, 28b qui peuvent être ou non identiques aux épaulements associés 2a, 2b ; 2c, 2d ; 2e équipant les compartiments arrières C et D des chambres de mesure 6a, 6b définissent également des butées de fin de course avant des pistons 9a, 9b dans ces chambres.

Cette seconde variante de réalisation du mesureur conforme à l'invention permet de réaligner les pistons 9a, 9b sur l'axe des chambres de mesure 6a, 6b associées lors de chaque phase de leur déplacement en va-et-vient.

## Revendications

1. Mesureur volumétrique pour installation de distribution de carburant liquide comportant :
- un orifice d'entrée relié à un réservoir de stockage et un orifice de sortie (5) relié à un pistolet distributeur,
- deux pistons (9a, 9b) d'axe essentiellement horizontal respectivement mobiles en va-et-vient, sous l'action de la pression exercée par le carburant transféré entre l'orifice d'entrée et l'orifice de sortie (5), dans des chambres de mesure cylindriques parallèles (6a, 6b) de volume prédéfini, chacune de ces chambres de mesure (6a, 6b) étant subdivisée par le piston associé en deux compartiments fermés hermétiquement, à savoir un premier compartiment (A, B) ou compartiment avant et un second compartiment (C, D) ou compartiment arrière,
- des organes d'accouplement du déplacement en va-et-vient des deux pistons (9a, 9b),
- un arbre de mesure essentiellement vertical (12) coopérant d'une part avec des organes de transmission susceptibles de transformer le déplacement en va-et-vient des deux pistons (9a, 9b) en un mouvement de rotation de cet arbre, et relié d'autre part à des organes de détection permettant de déterminer le volume de carburant traversant le mesureur en fonction de cette rotation, et
- un tiroir d'admission (4) fixé solidairement en rotation sur l'arbre de mesure (12) et muni d'ouvertures (4a, 4b) permettant de mettre successivement les compartiments (A, B, C D) des chambres de mesure (6a, 6b) en communication avec l'orifice d'entrée et avec l'orifice de sortie,
**caractérisé en ce que**
la paroi interne d'au moins l'un des compartiments (C, D) de chacune des chambres de mesure (6a, 6b) ou compartiment arrière est en permanence équipée, au niveau de son extrémité d'organes de réalignement automatique du piston à la fin de chacun de ses mouvements vers l'arrière, ces organes de réalignement automatique étant constitués par un épaulement périphérique (2e) de forme annulaire ou par au moins deux épaulements périphériques (2a, 2b ; 2c, 2d) constitués par des secteurs circulaires diamétralement opposés, ce ou ces épaulement(s) périphérique(s) définissant une butée de fin de course arrière pour le piston (9a, 9b) associé et ayant une surface frontale plane suffisante pour permettre le réalignement de ce piston.

2. Mesureur volumétrique selon la revendication 1,
**caractérisé en ce que**
le compartiment arrière (C, D) de chacune des chambres de mesure (6a, 6b) est équipé de deux épaulements identiques (2a, 2b) diamétralement opposés.

3. Mesureur volumétrique selon la revendication 2,
**caractérisé en ce que**
les épaulements (2a, 2b) sont en forme de secteurs annulaires et ont une face frontale plane.

4. Mesureur volumétrique selon l'une quelconque des revendications 2 et 3,
**caractérisé en ce que**
les épaulements (2c, 2d) ont une forme dentelée.

5. Mesureur volumétrique selon la revendication 1,
**caractérisé en ce qu'**
le compartiment arrière (C, D) de chacune des chambres de mesure (6a, 6b) est équipé d'un épaulement unique (2e) de forme annulaire s'étendant essentiellement sur la totalité de sa périphérie interne.

6. Mesureur volumétrique selon l'une quelconque des revendications 1 à 5,
**caractérisé en ce que**
le compartiment avant (A, B) de chacune des chambres de mesure (6a, 6b) est équipé à son extrémité d'un couvercle (8, 8a) muni d'une vis d'ajustement réglable (24a, 24b) faisant office de butée de fin de course avant pour le piston (9a, 9b) associé.

7. Mesureur volumétrique selon l'une quelconque des revendications 1 à 5,
**caractérisé en ce que**
le compartiment avant (A, B) de chacune des chambres de mesure est fermé hermétiquement à son extrémité par un couvercle (28) sur lequel est usiné au moins un épaulement (28a, 28b) faisant office de butée de fin de course avant pour le piston (9a, 9b) associé.

8. Procédé de calibrage électronique du volume cyclique de chaque chambre de mesure (6a, 6b) d'un mesureur volumétrique selon la revendication 7,
**caractérisé en ce que**
l'on calibre le volume cyclique de chaque chambre de mesure (6a, 6b) par une courbe de calibration spécifique de correction d'erreur en fonction du temps à partir de données de référence préenregistrées.

## Patentansprüche

1. Volumetrisches Messgerät für eine Anlage zur Abgabe von flüssigem Kraftstoff, umfassend:
- eine Einlassöffnung, die mit einem Lagerungsbehälter verbunden ist, und eine Auslassöffnung (5), die mit einer Zapfpistole verbunden ist,
- zwei Kolben (9a, 9b) mit im Wesentlichen horizontaler Achse, die unter der Einwirkung des Drucks, der von dem zwischen der Einlassöffnung und der Auslassöffnung (5) beförderten Kraftstoff ausgeübt wird, in parallelen zylindrischen Messkammern (6a, 6b) mit vordefiniertem Volumen jeweils eine hin- und hergehende Bewegung ausführen können, wobei jede dieser Messkammern (6a, 6b) durch den dazugehörigen Kolben in zwei hermetisch geschlossene Abteilungen unterteilt wird, nämlich eine erste Abteilung (A, B) oder vordere Abteilung und eine zweite Abteilung (C, D) oder hintere Abteilung,
- Organe zur Kopplung der hin- und hergehenden Bewegung der zwei Kolben (9a, 9b),
- eine im Wesentlichen vertikale Messwelle (12), die einerseits mit Übertragungsorganen zusammenwirkt, die imstande sind, die hin- und hergehende Bewegung der zwei Kolben (9a, 9b) in eine Drehbewegung dieser Welle umzuwandeln, und die andererseits mit Erfassungsorganen verbunden ist, die es ermöglichen, in Abhängigkeit von dieser Drehung das Kraftstoffvolumen zu bestimmen, das durch das Messgerät läuft, und
- ein Einlauffach (4), das drehfest an der Messwelle (12) befestigt ist und mit Öffnungen (4a, 4b) versehen ist, die es ermöglichen, die Abteilungen (A, B, C, D) der Messkammern (6a, 6b) nacheinander mit der Einlassöffnung und der Auslassöffnung in Verbindung zu setzen,
**dadurch gekennzeichnet, dass**
die Innenwand von wenigstens einer der Abteilungen (C, D) von jeder der Messkammern (6a, 6b) oder der hinteren Abteilung im Bereich ihres Endes dauerhaft mit Organen zur automatischen Wiederausrichtung des Kolbens am Ende von jeder seiner Rückwärtsbewegungen versehen ist, wobei diese Organe zur automatischen Wiederausrichtung aus einer Umfangsschulter (2e) mit kreisförmiger Form oder aus wenigstens zwei Umfangsschultern (2a, 2b; 2c, 2d) gebildet sind, die durch diametral entgegengesetzte Kreisringsektoren gebildet sind, wobei diese Umfangsschulter(n) einen hinteren Endanschlag für den dazugehörigen Kolben (9a, 9b) bildet (bilden) und eine ausreichende ebene Stirnfläche aufweist (aufweisen), um die Wiederausrichtung dieses Kolbens zu ermöglichen.

2. Volumetrisches Messgerät nach Anspruch 1,
**dadurch gekennzeichnet, dass**
die hintere Abteilung (C, D) von jeder der Messkammern (6a, 6b) mit zwei identischen, diametral entgegengesetzten Schultern (2a, 2b) versehen ist.

3. Volumetrisches Messgerät nach Anspruch 2,
**dadurch gekennzeichnet, dass**
die Schultern (2a, 2b) die Form von Ringsektoren aufweisen und eine ebene Stirnseite aufweisen.

4. Volumetrisches Messgerät nach einem der Ansprüche 2 und 3,
**dadurch gekennzeichnet, dass**
die Schultern (2c, 2d) eine gezahnte Form aufweisen.

5. Volumetrisches Messgerät nach Anspruch 1,
**dadurch gekennzeichnet, dass**
die hintere Abteilung (C, D) von jeder der Messkammern (6a, 6b) mit einer einzigen Schulter (2e) von ringförmiger Form versehen ist, die sich im Wesentlichen über ihren gesamten inneren Umfang erstreckt.

6. Volumetrisches Messgerät nach einem der Ansprüche 1 bis 5,
**dadurch gekennzeichnet, dass**
die vordere Abteilung (A, B) von jeder der Messkammern (6a, 6b) an ihrem Ende mit einem Deckel (8, 8a) versehen ist, der mit einer verstellbaren Justierschraube (24a, 24b) ausgestattet ist, die als vorderer Endanschlag für den dazugehörigen Kolben (9a, 9b) dient.

7. Volumetrisches Messgerät nach einem der Ansprüche 1 bis 5,
**dadurch gekennzeichnet, dass**
die vordere Abteilung (A, B) von jeder der Messkammern an ihrem Ende durch einen Deckel (28) hermetisch verschlossen ist, an dem wenigstens eine Schulter (28a, 28b) ausgebildet ist, die als vorderer Endanschlag für den dazugehörigen Kolben (9a, 9b) dient.

8. Verfahren zum elektronischen Kalibrieren des zyklischen Volumens jeder Messkammer (6a, 6b) eines volumetrischen Messgeräts nach Anspruch 7,
**dadurch gekennzeichnet, dass**
das zyklische Volumen jeder Messkammer (6a, 6b) durch eine spezifische Kalibrationskurve zur Korrektur von Fehlern als Funktion der Zeit auf Basis von vorab gespeicherten Referenzdaten kalibriert wird.

## Claims

1. Volumetric measurement device for liquid fuel dispensing equipment, comprising:
- an inlet opening connected to a storage tank and an outlet opening (5) connected to a dispensing nozzle,
- two pistons (9a, 9b) which have a substantially horizontal spindle and can each move back and forth, under the action of the pressure exerted by the fuel transferred between the inlet opening and the outlet opening (5), in parallel cylindrical measurement chambers (6a, 6b) having a predetermined volume, each of these measurement chambers (6a, 6b) being subdivided by means of the associated piston into two hermetically sealed compartments, namely a first compartment (A, B), or front compartment, and a second compartment (C, D), or rear compartment,
- means for coupling the back and forth movement of the two pistons (9a, 9b),
- a substantially vertical measurement shaft (12) which engages with transmission members capable of converting the back and forth movement of the two pistons (9a, 9b) into a rotational movement of said shaft, and is connected to detection members for determining the volume of fuel passing through the measurement device on the basis of this rotation, and
- an intake tray (4) which is attached to the measurement shaft (12) for rotation therewith and provided with openings (4a, 4b) for successively connecting the compartments (A, B, C, D) of the measurement chambers (6a, 6b) to the inlet opening and to the outlet opening,
**characterised in that**
the inner wall of at least one of the compartments (C, D), namely the rear compartment, of each of the measurement chambers (6a, 6b) permanently has, at the end thereof, members for automatically realigning the piston after each of the backward movements thereof, these automatic realignment members consisting of an annular peripheral shoulder (2e) or of at least two peripheral shoulders (2a, 2b; 2c, 2d) consisting of diametrically opposed circular sectors, this/these peripheral shoulder(s) defining a limit stop for the associated piston (9a, 9b) and having a planar front surface suitable for allowing this piston to be realigned.

2. Volumetric measurement device according to claim 1, **characterised in that** the rear compartment (C, D) of each of the measurement chambers (6a, 6b) has two identical, diametrically opposed shoulders (2a, 2b).

3. Volumetric measurement device according to claim 2, **characterised in that** the shoulders (2a, 2b) are in the shape of annular sectors and have a planar front face.

4. Volumetric measurement device according to any of claims 2 and 3, **characterised in that** the shoulders (2c, 2d) are serrated.

5. Volumetric measurement device according to claim 1, **characterised in that** the rear compartment (C, D) of each of the measurement chambers (6a, 6b) has a single annular shoulder (2e) which extends substantially over its entire inner periphery.

6. Volumetric measurement device according to any one of claims 1 to 5, **characterised in that** the front compartment (A, B) of each of the measurement chambers (6a, 6b) has, at the end thereof, a cover (8, 8a) provided with an adjustable adjusting screw (24a, 24b) which acts as a front limit stop for the associated piston (9a, 9b).

7. Volumetric measurement device according to any one of claims 1 to 5, **characterised in that** the front compartment (A, B) of each of the measurement chambers is hermetically sealed at the end thereof by means of a cover (28) on which there is machined at least one shoulder (28a, 28b) which acts as a front limit stop for the associated piston (9a, 9b).

8. Method for electrically calibrating the cyclic volume of each measurement chamber (6a, 6b) of a volumetric measurement device according to claim 7, **characterised in that** the cyclic volume of each measurement chamber (6a, 6b) is calibrated by a calibration curve for correcting errors as a function of time from pre-recorded reference data.
